Europäisches Patentamt

European Patent Office

Office européen des brevets

(19)

(11) Veröffentlichungsnummer: **0 314 020**
**B1**

(12) **EUROPÄISCHE PATENTSCHRIFT**

(45) Veröffentlichungstag der Patentschrift:
08.08.90

(21) Anmeldenummer: 88117620.0

(22) Anmeldetag: 22.10.88

(51) Int. Cl.⁵: **B01J 23/66**, B01J 23/89,
C07C 5/09

(54) Katalysator zur selektiven Hydrierung von mehrfach ungesättigten Kohlenwasserstoffen.

(30) Priorität: 28.10.87 DE 3736557

(43) Veröffentlichungstag der Anmeldung:
03.05.89 Patentblatt 89/18

(45) Bekanntmachung des Hinweises auf die Patenterteilung:
08.08.90 Patentblatt 90/32

(84) Benannte Vertragsstaaten:
DE FR GB IT NL

(56) Entgegenhaltungen:
EP-A- 0 064 301
EP-A- 0 119 715
DE-A- 3 320 388
FR-A- 2 369 351
FR-A- 2 482 953

(73) Patentinhaber: SÜD-CHEMIE AG, Lenbachplatz 6,
D-8000 München 2(DE)

(72) Erfinder: Schneider, Michael, Dr., Waldparkstrasse 54a,
D-8012 Ottobrunn-Riemerling(DE)
Erfinder: Kochloefl, Karl, Dr.,
Justus-von-Liebig-Strasse 3,
D-8206 Bruckmühl/Heufeld(DE)
Erfinder: Ladebeck, Jürgen, Dr.,
Franz-Xaver-Graf-Strasse 7, D-8202 Bad Aibling(DE)
Erfinder: Maletz, Gerd, Dr., Marienburgstrasse 34,
D-8206 Bruckmühl(DE)

(74) Vertreter: Reitzner, Bruno, Dr. et al, Patentanwälte
Dipl.-Ing. R. Splanemann Dr. B. Reitzner, Dipl.-Ing. K.
Baronetzky Tal 13, D-8000 München 2(DE)

EP 0 314 020 B1

## Beschreibung

Die Erfindung betrifft einen Katalysator zur selektiven Hydrierung von mehrfach ungesättigten Kohlenwasserstoffen, die zur Gänze oder zum überwiegenden Teil mehr als fünf Kohlenstoffatome enthalten, enthaltend Palladium mit einem Promotor auf einem Metalloxidträger.

Derartige Katalysatoren, die hauptsächlich zur selektiven Hydrierung von Butadien, Pentadien und Cyclopentadien verwendet werden, sind beispielsweise aus den DE-A-32 07 029, DE-A-32 07 030, DE-A-31 43 647 und EP-A-0 011 906 bekannt. Die Hydrierreaktionen wurden hier überwiegend auf Palladium-Trägerkatalysatoren durchgeführt, wobei als Träger vor allem $Al_2O_3$ oder $SiO_2$ dienten. Die Reaktionsführung ist in einer Arbeit von H. Laufer in "Erdöl und Kohle", Band 36, 249 (1983) ausführlich behandelt. Auch in der Arbeit von M. L. Derrieu in "Catalytic Hydrogenation", Elsevier, Amsterdam 1986, S. 613, sind eingeführte kommerzielle Prozesse und die dabei verwendeten Katalysatoren beschrieben. Die Selektivität dieser bekannten Katalysatoren war aber noch unbefriedigend.

Eine deutliche Verbesserung der Selektivität bei der Dien- oder Acetylenhydrierung (erhöhte Olefinausbeute) wurde durch eine partielle Vergiftung (Promotierung von Pd-Katalysatoren mit Zn, Cd, Sn, Pb und Hg; s. G.C. Bond, "Catalysis by Metals", Academic Press, London 1962, S. 99 und 297) erreicht. Auch die Anwendung von $CaCO_3$ als Träger und eine Promotierung des Palladiums mit Zn führte zur Erhöhung der Selektivität bei der Cylcopentadienhydrierung (US-A-39 47 510 und 38 57 894). Ebenso ist die Anwendung von anderen Trägern, wie MgO oder $BaSO_4$, bei Pd-Katalysatoren bekannt (R.J. Peterson, "Hydrogenation Catalysts, Noyes Data Corp., New York 1977, S. 183).

Besonders schwierig gestaltet sich aber die selektive Hydrierung von Dienen mit mehr als 5 Kohlenstoffatomen, z.B. von $C_6$- bis $C_{10}$-Dienen, insbesondere mit isolierten Doppelbindungen. Sie verhalten sich bei der Hydrierung üblicherweise wie Monoolefine, d.h. sie werden sofort zu den entsprechenden Alkanen perhydriert. Will man eine selektive Hydrierung erreichen, die auf der Stufe des Monoolefins stehenbleibt, so sollte der Reaktion nach der Lehrmeinung eine Doppelbindungsisomerisierung zu einem konjugierten Dien vorausgehen. Diese Isomerisierung wird in der Regel durch die Oberflächeneigenschaft des Trägermaterials, etwa seine Acidität, beeinflußt.

Für die Hydrierung längerkettiger Diene werden in der Literatur häufig Nickel-Katalysatoren beschrieben, die zur Selektivitätssteigerung partiell mit Schwefel vergiftet werden. Als Beispiel mag die in der US-A-34 72 763 beschriebene Hydrierung eines Pyrolysebenzins mit einem Diolefinanteil von 6,8 Vol.-% dienen. Nachteile dieser Katalysatoren sind hohe Hydrierdrucke und geringe Raumgeschwindigkeiten, z.B. etwa 40 bar und 2 Liter Kohlenwasserstoff (flüssig) je Liter Katalysator und Stunde.

Geeigneter sind die aus der DE-A-33 20 388 bekannten Katalysatoren zur selektiven Hydrierung von mehrfach ungesättigten organischen Verbindungen. Diese Katalysatoren sind gekennzeichnet durch

(A) eine Metallkomponente aus einem oder mehreren Elementen der Gruppe VIII des Periodensystems, insbesondere Palladium,
(B) einem Trägermaterial auf der Basis
($b_1$) eines oder mehrerer n-halbleitender Oxide eines oder mehrerer Elemente aus den Nebengruppen IVb (insbesondere $TiO_2$), Vb und VIb des Periodensystems oder des Thoriums oder Cers, bzw. auf der Basis
($b_2$) eines oder mehrerer n-halbleitender Mischoxide der Formel $Me_2Me_1(O)_x$, worin $Me_1$ ein Element aus der in ($b_1$) definierten Gruppe, $Me_2$ ein Erdalkalimetall oder ein von $Me_1$ verschiedenes Element aus der in ($b_1$) definierten Gruppe und x die Anzahl der zur Absättigung von $Me_1$ und $Me_2$ bis zum Bereich eines n-halbleitenden Zustandes erforderlichen Sauerstoffatome bedeuten;

wobei das Wasserstoff-Chemisorptionsvermögen, ausgedrückt als das Atomverhältnis zwischen chemisorbierten Wasserstoffatomen und an der Oberfläche der Metallteilchen befindlichen Metallatomen der Metallkomponente (A)($H/Me_A$) mindestens 0,6:1 beträgt.

Die Ausführungsbeispiele der DE-A-33 20 388 beschreiben die Hydrierung von $C_6$- und $C_{10}$-Dienen im 1:10-Gemisch mit den entsprechenden Monoolefinen.

Mit steigendem Molekulargewicht der Diene und sinkender Konzentration in den Kohlenwasserstoff-Fraktionen wird die selektive Hydrierung jedoch deutlich erschwert. Derartige Kohlenwasserstoffe entstammen z.B. thermischen und katalytischen Crackverfahren und katalytischen Dehydrierungen. Bei der katalytischen Dehydrierung von Kohlenwasserstoffen mit mehr als 5 bis etwa 30 Kohlenstoffatomen, z.B. von $C_{10}$- bis $C_{15}$-Paraffinen, zur Gewinnung von höheren Monoolefinen, entsteht beispielsweise ein Produktgemisch aus nicht umgesetzten Paraffinen mit etwa 10% Monoolefinen und etwa 1% Diolefinen. Der Diolefinanteil muß im Hinblick auf unerwünschte Nebenreaktionen bei der Weiterverarbeitung reduziert werden. Eine selektive Hydrierung der Diolefine unter Zugewinn von Monoolefinen stellt in derartigen Produktströmen besonders hohe Anforderungen an den Katalysator.

Neben hoher Selektivität ist die Zwischenschaltung einer Hydrierstufe nur dann wirtschaftlich zu vertreten, wenn der Hydrierkatalysator geringe Verweilzeiten, einen geringeren Hydrierdruck und die Anwendung mäßiger Temperaturen erlaubt.

Der Erfindung liegt somit die Aufgabe zugrunde, die in der DE-A-33 20 388 beschriebenen Katalysatoren hinsichtlich ihres Einsatzbereiches (geringe Hydrierdrücke und Temperaturen) sowie hinsichtlich ihrer Selektivität zu verbessern.

Gegenstand der Erfindung ist somit ein Katalysator zur selektiven Hydrierung von mehrfach ungesättigten Kohlenwasserstoffen die zur Gänze oder zum überwiegenden Teil mehr als 5 Kohlenstoffatome enthalten, der Palladium mit einem Promotor auf einem Metalloxidträger enthält und der dadurch gekennzeichnet ist, daß der Promotor ein Metall aus der Nebengruppe 1B des Periodensystems darstellt und daß der Metalloxidträger makroporöses $TiO_2$, gegebenenfalls im Gemisch mit makroporösem $CeO_2$ und/oder $ZrO_2$, darstellt, wobei das Porenvolumen des makroporösen Trägers etwa 0,2 bis 0,4, vorzugsweise etwa 0,25 bis 0,3 ml pro g Träger und der Anteil der Makroporen mit einem Durchmesser von mehr als 14 nm mindestens 65% beträgt.

Der erfindungsgemäße Katalysator hat eine für die Erzielung einer hohen Selektivität optimale Porenstruktur. Diese Porenstruktur ist sehr wichtig, da bei der selektiven Hydrierung von langkettigen Kohlenwasserstoffen die Reaktion mit Wasserstoff durch den Massentransport (Diffusion) in den Poren des Katalysators möglichst wenig gehemmt werden soll.

Aus der EP-B-0 064 301 ist ein Katalysator für die selektive Hydrierung von Acetylen bekannt, welcher Palladium und Silber enthaltende alpha-Aluminiumoxidteilchen enthält, wobei der Palladiumgehalt von 0,01 bis 0,025 Gew.-% des Katalysators beträgt, der Anteil des Silbers in Gewichtsprozent mindestens doppelt so groß wie der Anteil des Palladiums ist, das Silber über alle Katalysatorteilchen verteilt ist und wobei mindestens 90 % der Katalysatorteilchen das gesamte Palladium im wesentlichen in einem Bereich innerhalb 300 µm von der äußeren Oberfläche konzentriert ist. Das alpha-Aluminiumoxid hat vorzugsweise eine spezifische Oberfläche im Bereich von 3 bis 7 m²/g, ein Porenvolumen von 0,24 bis 0,34 ml/g und einen mittleren Porenradius im Bereich von 68,5 bis 227 nm, d.h. es kann als makroporöses alpha-Aluminiumoxid bezeichnet werden.

Der aus der EP-B-0 064 301 bekannte Katalysator wird jedoch nicht für die selektive Hydrierung von mehrfach ungesättigten höheren Kohlenwasserstoffen verwendet. Wenn diese Kohlenwasserstoffe isolierte Doppelbindungen enthalten, so verhalten sie sich im wesentlichen wie einfach ungesättigte Kohlenwasserstoffe und sind insofern nicht vergleichbar mit Acetylen, das nach der EP-B-0 064 301 selektiv zu Äthylen, d.h. einem Monoolefin hydriert werden soll.

Der makroporöse alpha-Aluminiumoxidträger nach der EP-B-0 064 301 ist ein inerter Träger, der den Reaktionsablauf nicht beeinflußt. Bei der selektiven Acetylenhydrierung bilden sich Polymerisate (Grünöl), die sich auf der Oberfläche des Katalysators festsetzen, weshalb für den Träger eine makroporöse Struktur vorgeschlagen wurde.

Die erfindungsgemäß verwendeten langkettigen, mehrfach ungesättigten höheren Kohlenwasserstoffe polymerisieren dagegen am Katalysator praktisch nicht, insbesondere wenn sie isolierte Doppelbindungen enthalten. Die makroporöse Struktur des erfindungsgemäßen Katalysators ist im vorliegenden Fall deshalb wichtig, weil die langkettigen, mehrfach ungesättigten Kohlenwasserstoffmoleküle an die Katalysatoroberfläche diffundieren und

die selektiv hydrierten Kohlenwasserstoffmoleküle ungehindert von der Katalysatoroberfläche weg diffundieren müssen.

Ferner bildet das makroporöse Titandioxid im Gegensatz zum inerten alpha-Aluminiumoxid eine aktive Komponente des erfindungsgemäßen Katalysators.

Ein wichtiger Bestandteil, der die Aktivität des erfindungsgemäßen Katalysators bei niedrigen Temperaturen und Drücken günstig beeinflußt, ist der Promotor, der ein Metall aus der Nebengruppe 1B des Periodensystems, insbesondere Kupfer, Silber und Gold, darstellt. Das bevorzugte Promotormetall ist Silber.

Im allgemeinen beträgt der Durchmesser der Makroporen im Metalloxidträger etwa 14 bis 80 nm, obwohl auch höhere Durchmesser vorkommen. Innerhalb des genannten Bereichs beträgt der Anteil der Makroporen vorzugsweise 65 bis 95, insbesondere 80 bis 85%.

Der makroporöse Metalloxidträger kann auch als Zwischenschicht auf einem inerten Träger, z.B. Aluminiumoxid oder Cordierit, aufgebracht sein.

Vorzugsweise hat der makroporöse Metalloxidträger bzw. der Anteil des Metalloxidträgers (Zwischenschicht) eine BET-Oberfläche von mindestens 20 m²/g, insbesondere von mindestens 25 m²/g, wobei die Obergrenzen im allgemeinen bei etwa 250 m²/g, insbesondere bei etwa 150 m²/g liegen.

Der Palladiumgehalt des Katalysators beträgt vorzugsweise 0,01 bis 2 Gew.-%, insbesondere 0,05 bis 0,5 Gew.-%, wobei sich das Palladium vorwiegend an der Trägeroberfläche befindet. Man kann hier von einer "schalenförmigen" Edelmetallverteilung sprechen. Auf diese Weise wird die aktive Palladiumoberfläche für die Dienhydrierung der langkettigen Moleküle optimal genutzt.

Man kommt auf diese Weise auch mit einer geringeren Palladiummenge aus.

Das Gewichtsverhältnis zwischen Palladium und Promotormetall kann innerhalb weiter Grenzen schwanken, vorzugsweise beträgt dieses Verhältnis 0,05 bis 200, insbesondere 0,1 bis 50.

Der makroporöse Metalloxidträger kann vorzugsweise dadurch erhalten werden, daß ein Gemisch aus pulverförmigem Trägermaterial und einer thermisch unter Gasbildung zersetzbaren Substanz, gegebenenfalls nach einer Formgebung, bzw. nach dem Aufbringen als Zwischenschicht auf dem inerten Träger, einer thermischen Behandlung unterzogen wird. Man kann beispielsweise eine organische Substanz zusetzen, die sich bei der Temperatur der Calcinierung des Trägers zersetzt und/oder verdampft und dadurch die gewünschte Makroporenstruktur erzeugt. Natürlich können auch anorganische oder metallorganische Substanzen, die sich unter Gasbildung zersetzen, verwendet werden.

Die Substanzen, die sich thermisch unter Gasbildung zersetzen, werden im allgemeinen in einer Menge von 5 bis 25 Gew.-%, bezogen auf den nach der thermischen Behandlung erhaltenen makroporösen Metalloxidträger, bzw. auf den Anteil des makroporösen Metalloxidträgers, verwendet.

Die erfindungsgemäßen Katalysatoren können in üblicher Weise dadurch erhalten werden, daß der Metalloxidträger mit einer Palladiumsalzlösung getränkt bzw. besprüht wird. In der Literatur wird dieses Verfahren als "pore filling method" bezeichnet. Hierbei wird das Palladium über die gesamte spezifische Oberfläche des Metalloxidträgers verteilt. Durch die beim Trocknen des imprägnierten Trägers auftretenden "chromatographischen Effekte" entstehen jedoch eine unregelmäßig mit Palladium bedeckte Oberfläche des Trägers und sehr breite Palladiumtiefenprofile. Da sich beide Effekte negativ auf die Aktivität und Selektivität des Katalysators auswirken können, wird vorzugsweise so gearbeitet, daß der makroporöse Metalloxidträger mit einer Lösung eines Reduktionsmittels (z.B. eines Formiats) für die Palladiumverbindung (vorzugsweise ein Palladiumsalz) vorimprägniert und getrocknet wird. Der so behandelte Metalloxidträger wird dann mit der Lösung der Palladiumverbindung imprägniert, getrocknet und zur Reduktion der Palladiumverbindung calciniert. Hierbei wird das Palladium durch sofortige Reduktion an der Oberfläche "fixiert" und somit die gewünschte "schalenförmige" Verteilung erreicht. Diese Verteilung kann durch rasterelektronenmikroskopische Untersuchungen, verbunden mit einer energiedispersiven Röntgenanalyse (REM/EDX-Untersuchung) nachgewiesen werden. Anschließend wird der mit dem Palladium beladene Metalloxidträger mit einer Lösung einer Promotorverbindung (z.B. einem Silbersalz) imprägniert, getrocknet und calciniert.

Wie schon erwähnt, ist die Bildung von konjugierten Dienen durch die Verschiebung der Doppelbindung aus isolierten Dienen eine Voraussetzung für die selektive Hydrierung der Diene zu Olefinen. Es wurde festgestellt, daß die ausgeprägte Fähigkeit des erfindungsgemäßen Katalysators zur Doppelbindungs-Verschiebung einerseits wie auch zur selektiven Hydrierung der konjugierten Diene andererseits, aus der Wechselwirkung der drei Komponenten Pd, Promotormetall (insbesondere Ag) und makroporösem $TiO_2$-haltigen Träger resultiert.

Gegenstand der Erfindung ist auch die Verwendung des vorstehend beschriebenene Katalysators zur selektiven katalytischen Hydrierung von mehrfach ungesättigten Kohlenwasserstoffen, die zur Gänze oder zum überwiegenden Teil mehr als 5 Kohlenstoffatome enthalten, zu den entsprechenden Monoolefinen. Vorzugsweise erfolgt vor der selektiven Hydrierung eine Vorabscheidung oder Fraktionierung der niederen ($C_2$ - $C_4$), mehrfach ungesättigten Kohlenwasserstoffe.

Die Zufuhr des Hydrierwasserstoffes zum Hydrierreaktor erfolgt vorzugsweise getrennt von der Zufuhr der mehrfach ungesättigten Kohlenwasserstoffe. Im allgemeinen wird der Katalysator in einem Durchflußreaktor, typischerweise im Gleichstrom von oben nach unten ("trickle phase") mit dem Einsatz-Kohlenwasserstoff und dem Hydrierwasserstoff beaufschlagt. Bei einigen Crack- und Dehydrierverfahren kann dieser Hydrierreaktor unmittelbar in den Produktstrom vor der Abtrennung der gasförmigen und flüssigen Produkte eingebaut werden. Zur gezielteren Wasserstoffdosierung ist es aber häufig zweckmäßig, eine Vorabscheidung und dann eine gesonderte Wasserstoff-Zuspeisung vorzusehen. Auch bei Anwesenheit von Gaskomponenten, die reversible oder irreversible Katalysatorgifte darstellen, ist eine Vorabscheidung, ggf. auch eine Vorfraktionierung, sinnvoll.

Die Hydrierung kann bei Drücken und Temperaturen erfolgen, die z.B. bei katalytischen $C_{10}$- bis $C_{13}$-Paraffindehydrierungen nach dem Einsatz/Produktwärmetauscher vorgesehen sind.

Vorzugsweise erfolgt die selektive Hydrierung in einem Temperaturbereich von 80 bis 180° C, insbesondere von 100 - 160° C, einem Druckbereich von 1 - 10, insbesondere von 1 - 3 bar, bei einer Raumgeschwindigkeit (LHSV = liquid hourly space velocity) von 1 bis 30 Liter der flüssigen Kohlenwasserstoff-Fraktion je Liter Katalysator und Stunde und einem Molverhältnis Wasserstoff zu mehrfach ungesättigten Kohlenwasserstoffen von 1,1 bis 5, insbesondere von 2 bis 3,5. Die jeweils günstigsten Bedingungen hängen natürlich von der Art des Kohlenwasserstoffgemisches, seinem Gehalt an mehrfach ungesättigten Kohlenwasserstoffen, der gewünschten Selektivität, aber auch von der Reaktorkonfiguration ab.

Das nachfolgende Beispiel 1 beschreibt in nicht einschränkender Weise die Herstellung eines erfindungsgemäßen Katalysators. Dieser Katalysator wurde anschließend gemäß Beispiel 2 für eine $CO_{10}$- bis $CO_{13}$-Dienhydrierung in einem Durchflußreaktor verwendet.

Beispiel 1

Herstellung des Katalysators

Ein kommerzielles Titandioxid wird in einem Intensivmischer unter Zusatz von etwa 15 Gew.-% Glycerin zu einer Paste homogenisiert. Nach mehrstündigem Trocknen bei 100°C wird die $TiO_2$-Masse zerkleinert, mit Aluminiumstearat als Tablettierhilfsmittel vermischt und zu zylindrischen Tabletten gepreßt (Durchmesser = Höhe = 4,5 mm), deren Seitendruckfestigkeit 50 - 85 N/4,5 mm beträgt. Die $TiO_2$-Tabletten werden mehrere Stunden bei 550°C in oxidierender Atmosphäre calciniert, wobei sich das Glycerin unter Zurücklassung der gewünschten Makroporen zersetzt bzw. verbrennt. Nach der Calcinierung weist der Träger eine mittlere Seitendruckfestigkeit von 150 N/4,5 mm auf. Das mittels Hg-Porosymmetrie ermittelte Porenvolumen beträgt 0,27 ml/g, mit einer sehr engen (monomodalen) Porenverteilung mit einem Maximum bei 20 nm.

Der $TiO_2$-Träger wird mit einer 5 %igen wäßrigen Natriumformiatlösung sprühimprägniert (auf 100 g Träger 13 ml Formiatlösung). Danach wird der auf diese Weise vorbehandelte Träger mit dem gleichen Volumen einer 2,5 %igen wäßrigen $PdCl_2$-Lösung sprühimprägniert. Zur vollständigen Reduktion des Edelmetalls überschichtet man die Trägertabletten mit Formiatlösung, saugt ab und wäscht. Nach dem Trocknen bei 110°C wird bis zu einer Endtemperatur von 400°C calciniert.

Anschließend wird die Silberpromotierung vorgenommen. Man imprägniert die palladiumhaltigen $TiO_2$-Tabletten bei Raumtemperatur mit Silbernitratlösung, trocknet bei 110°C und calciniert nochmals bis zu einer Temperatur von 360°C.

Der Katalysator weist folgende physikalische Daten auf:

| | | |
|---|---|---|
| Seitendruckfestigkeit | (N/4,5 mm) | 7,4 |
| Schüttdichte | (g/Liter) · | 1110 |
| BET-Oberfläche | (m²/g) | 43 |
| Porenvolumen | (ml/g) | 0,29 |
| Porenverteilung: | | |
| 7,5–14 nm | | 3,7 |
| 14–80 nm | | 83,9 |
| 80–1750 nm | | 7,5 |
| > 1750 nm | | 4,9 |

De Palladiumgehalt beträgt 0,18 Gew.-%, der Silbergehalt 0,13 Gew.-%. Der Katalysator weist eine schalenförmige Palladiumverteilung auf.

Beispiel 2

Selektive Hydrierung

Es wird eine dienhaltige Kohlenwasserstoff-Fraktion ($C_{10}$ bis $C_{13}$) mit folgender Zusammensetzung (Gew.-%) selektiv hydriert:

| | |
|---|---|
| Diolefine (Diene) | 1,0 |
| Olefine | 10,0 |
| Aromaten | 3,0 |
| Paraffine | 86,0 |

Die Hydrierungen wurden in einem Durchflußreaktor mit den Pd/Ag-Katalysatortabletten von Beispiel 1 (4,5 x 4,5 mm) unter folgen den Reaktionsbedingungen durchgeführt:

| | |
|---|---|
| T | 120°C |
| P (gesamt) | 1,5 bar |
| $P_{H2}$ | 0,3 bar |
| $H_2$/Dien-Molverhältnis | 3 |
| LHSV | 10 (Kohlenwasserstoff-Fraktion)/Stunde und Liter Katalysator |

Das Hydrierprodukt enthielt 0,3 Gew.-% Diolefine, der Aromatengehalt blieb unverändert. Der Olefinanteil erhöhte sich auf 10,4 Gew.-%, der Paraffingehalt erhöhte sich geringfügig auf 86,3 %.

**Patentansprüche**

1. Katalysator zur selektiven Hydrierung von mehrfach ungesättigten Kohlenwasserstoffen, die zur Gänze oder zum überwiegenden Teil mehr als 5 Kohlenstoffatome enthalten, enthaltend Palladium mit einem Promotor auf einem Metalloxidträger, dadurch gekennzeichnet, daß der Promotor ein Metall aus der Nebengruppe 1B des Periodensystems darstellt und daß der Metalloxidträger makroporöses $TiO_2$, gegebenenfalls im Gemisch mit makroporösem $CeO_2$ und/oder $ZrO_2$, darstellt, wobei das Porenvolumen des makroporösen Trägers etwa 0,2 bis 0,4, vorzugsweise etwa 0,25 bis 0,3 ml pro g Träger und der Anteil der Makroporen mit einem Durchmesser von mehr als 14 nm mindestens 65% beträgt.

2. Katalysator nach Anspruch 1, dadurch gekennzeichnet, daß der Promotor Silber darstellt.

3. Katalysator nach Anspruch 1 oder 2, dadurch gekennzeichnet, daß der Anteil der Makroporen im Metalloxidträger mit einem Durchmesser von 14 bis 80 nm, 65 bis 95, vorzugsweise 80 bis 85%, beträgt.

4. Katalysator nach einem der Ansprüche 1 bis 3, dadurch gekennzeichnet, daß der makroporöse Metalloxidträger als Zwischenschicht auf einem inerten Träger aufgebracht ist.

5. Katalysator nach einem der Ansprüche 1 bis 4, dadurch gekennzeichnet, daß der makroporöse Metalloxidträger bzw. der Anteil des makroporösen Metalloxidträgers eine BET-Oberfläche von mindestens 20 m²/g, vorzugsweise von mindestens 25 m²/g hat.

6. Katalysator nach einem der Ansprüche 1 bis 5, dadurch gekennzeichnet, daß sein Palladiumgehalt 0,01 bis 2 Gew.-%, vorzugsweise 0,05 bis 0,5 Gew.-%, beträgt und daß sich das Palladium vorwiegend an der Trägeroberfläche befindet.

7. Katalysator nach einem der Ansprüche 1 bis 6, dadurch gekennzeichnet, daß das Gewichtsverhältnis zwischen Palladium und Promotormetall 0,05 bis 200, vorzugsweise 0,1 bis 50, beträgt.

8. Katalysator nach einem der Ansprüche 1 bis 7, dadurch gekennzeichnet, daß der makroporöse Metalloxidträger dadurch erhältlich ist, daß ein Gemisch aus pulverförmigem Trägermaterial und einer thermisch unter Gasbildung zersetzbaren Substanz, gegebenenfalls nach einer Formgebung bzw. nach dem Aufbringen als Zwischenschicht auf einen inerten Träger, einer thermischen Behandlung unterzogen wird.

9. Katalysator nach Anspruch 8, dadurch gekennzeichnet, daß die thermisch unter Gasbildung zersetzbare Substanz in einer Menge von 5 bis 25 Gew.-%, bezogen auf den nach der thermischen Behandlung erhaltenen makroporösen Metalloxidträger bzw. auf den Anteil des makroporösen Metalloxidträgers, vorliegt.

10. Katalysator nach einem der Ansprüche 1 bis 9, dadurch erhältlich, daß der makroporöse Metalloxidträger mit einer Lösung eines Reduktionsmittels für die Palladiumverbindung vorimprägniert, getrocknet, mit der Lösung der Palladiumverbindung imprägniert, getrocknet, zur Reduktion der Palladiumverbindung calciniert, mit einer Lösung einer Promotorverbindung imprägniert, getrocknet und calciniert wird.

11. Verwendung des Katalysators nach einem der Ansprüche 1 bis 10 zur selektiven katalytischen Hydrierung von mehrfach ungesättigten Kohlenwasserstoffen, die zur Gänze oder zum überwiegenden Teil mehr als 5 Kohlenstoffatome enthalten, zu den entsprechenden Monoolefinen.

12. Verwendung nach Anspruch 11, dadurch gekennzeichnet, daß die selektive Hydrierung im Produktstrom einer katalytischen oder thermischen Kohlenwasserstoff-Crackung oder -Dehydrierung erfolgt.

13. Verwendung nach Anspruch 11 oder 12, dadurch gekennzeichnet, daß vor der selektiven Hydrierung eine Vorabscheidung oder Fraktionierung der niederen, mehrfach ungesättigten Kohlenwasserstoffe erfolgt.

14. Verwendung nach einem der Ansprüche 11 bis 13, dadurch gekennzeichnet, daß die Zufuhr des Hydrierwasserstoffes zum Hydrierreaktor getrennt von der Zufuhr der mehrfach ungesättigten Kohlenwasserstoffe erfolgt.

15. Verwendung nach einem der Ansprüche 11 bis 14, dadurch gekennzeichnet, daß die selektive Hydrierung in einem Temperaturbereich von 80 bis 180°C, einem Druckbereich von 1 bis 10 bar, bei einer Raumgeschwindigkeit (LHSV) von 1 bis 30 Liter der flüssigen Kohlenwasserstoff-Fraktion je Liter Katalysator und Stunde und einem Molverhältnis Wasserstoff zu mehrfach ungesättigten Kohlenwasserstoffen von 1,1 bis 5 erfolgt.

**Claims**

1. A catalyst for the selective hydrogenation of polyunsaturated hydrocarbons, all or the majority of which contain more than 5 carbon atoms, containing palladium with a promoter on a metal oxide carrier, characterised in that the promoter is a metal from subgroup 1B of the periodic system, and in that the metal oxide carrier is macroporous $TiO_2$, optionally mixed with macroporous $CeO_2$ and/or $ZrO_2$, wherein the pore volume of the macroporous carrier is approximately 0.2 to 0.4, preferably approximately 0.25 to 0.3 ml per g of carrier and the proportion of macropores with a diameter greater than 14 nm is at least 65%.

2. A catalyst according to claim 1, characterised in that the promoter is silver.

3. A catalyst according to claim 1 or 2, characterised in that the proportion of macropores in the metal oxide carrier with a diameter of 14 to 80 nm, is 65 to 95%, preferably 80 to 85%.

4. A catalyst according to any one of claims 1 to 3, characterised in that the macroporous metal oxide carrier is applied as an intermediate layer to an inert support.

5. A catalyst according to any one of claims 1 to 4, characterised in that the macroporous metal oxide carrier or the macroporous metal oxide carrier component has a B.E.T. surface area of at least 20 $m^2/g$, preferably at least 25 $m^2/g$.

6. A catalyst according to any one of claims 1 to 5, characterised in that its palladium content is 0.01 to 2% by weight, preferably 0.05 to 0.5% by weight, and in that the palladium is predominantly present at the carrier surface.

7. A catalyst according to any one of claims 1 to 6, characterised in that the weight ratio of palladium to promoter metal is 0.05 to 200, preferably 0.1 to 50.

8. A catalyst according to any one of claims 1 to 7, characterised in that the macroporous metal oxide carrier can be obtained by heat treating a mixture of powdered carrier material and a substance wich can be decomposed thermally with gas being formed, optionally after shaping and/or after application as an intermediate layer to an inert support.

9. A catalyst according to claim 8, characterised in that the substance which can be decomposed thermally with gas being formed is present in a quantity of from 5 to 25% by weight, in relation to the macroporous metal oxide carrier obtained after the heat treatment and/or to the macroporous metal oxide carrier component.

10. A catalyst according to any one of claims 1 to 9, which can be obtained in that the macroporous metal oxide carrier is pre-impregnated with a solution of a reducing agent for the palladium compound, dried, impregnated with the solution of the palladium compound, dried, calcined so as to reduce the palladium compound, impregnated with a solution of a promoter compound, dried and calcined.

11. Use of the catalyst according to any one of claims 1 to 10 for the selective catalytic hydrogenation of polyunsaturated hydrocarbons, all or the majority of wich contain more than 5 carbon atoms, to form the corresponding mono-olefins.

12. Use according to claim 11, characterised in that the selective hydrogenation takes place in the product flow of a catalytic or thermal hydrocarbon cracking or dehydrogenation process.

13. Use according to claim 11 or 12, characterised in that, before the selective hydrogenation, a preseparation or fractionation of the lower, polyunsaturated hydrocarbons is carried out.

14. Use according to any one of claims 11 to 13, characterised in that the supply of hydrogenating hydrogen to the hydrogenation reactor takes place separately from the supply of the polyunsaturated hydrocarbons.

15. Use according to any one of claims 11 to 14, characterised in that the selective hydrogenation takes place within a temperature range of from 80 to 180°C, a pressure range of from 1 to 10 bar, at a spatial velocity (LHSV) of from 1 to 30 litres of the liquid hydrocarbon fraction per litre of catalyst per hour, and at a molar ratio of hydrogen to plyunsaturated hydrocarbons of 1.1 to 5.

**Revendications**

1. Catalyseur d'hydrogénation sélective d'hydrocarbures à insaturation multiple, qui contiennent, en totalité ou dans une partie prépondérante, plus de 5 atomes de carbone, ledit catalyseur contenant du palladium avec un promoteur sur un support d'oxyde métallique, caractérisé par le fait que le promoteur est constitué par un métal du sous-groupe IB de la Classification Périodique, et que le support d'oxyde métallique est constitué par $TiO_2$ macroporeux, éventuellement en mélange avec $CeO_2$ et/ou $ZrO_2$ macroporeux, le volume de pores du support macroporeux s'élevant à une valeur d'environ 0,2 à 0,4, de préférence, d'environ 0,25 à 0,3 ml par g de support, et la fraction des macropores ayant un diamètre de plus de 14 nm s'élevant à au moins 65%.

2. Catalyseur selon la revendication 1, caractérisé par le fait que le promoteur est constitué par l'argent.

3. Catalyseur selon l'une des revendications 1 ou 2, caractérisé par le fait que la fraction des macropores du support d'oxyde métallique ayant un diamètre allant de 14 à 80 nm, s'élève à une valeur de 65 à 95, de préférence, de 80 à 85%.

4. Catalyseur selon l'une des revendications 1 à 3, caractérisé par le fait que le support macroporeux d'oxyde métallique est appliqué en tant que couche intermédiaire sur un support inerte.

5. Catalyseur selon l'une des revendications 1 à 4, caractérisé par le fait que le support macroporeux d'oxyde métallique ou la fraction du support macroporeux d'oxyde métallique a une surface BET d'au moins 20 m²/g, de préférence, d'au moins 25 m²/g.

6. Catalyseur selon l'une des revendications 1 à 5, caractérisé par le fait que sa teneur en palladium s'élève à une valeur de 0,01 à 2% en poids, de préférence, de 0,05 à 0,5% en poids, et que le palladium se trouve de façon prépondérante sur la surface du support.

7. Catalyseur selon l'une des revendications 1 à 6, caractérisé par le fait que le rapport en poids entre le palladium et le métal du promoteur s'élève à une valeur de 0,05 à 200, de préférence, de 0,1 à 50.

8. Catalyseur selon l'une des revendications 1 à 7, caractérisé par le fait que le support macroporeux d'oxyde métallique peut être obtenu en soumettant à un traitement thermique un mélange d'une matière de support pulvérulente et d'une substance thermiquement décomposable avec formation de gaz, éventuellement après un façonnage ou après l'application en tant que couche intermédiaire sur un support inerte.

9. Catalyseur selon la revendication 8, caractérisé par le fait que la substance thermiquement décomposable avec formation de gaz est présente en une quantité allant de 5 à 25% en poids, par rapport au support macroporeux d'oxyde métallique, ou à la fraction du support macroporeux d'oxyde métallique, obtenu(e) après le traitement thermique.

10. Catalyseur selon l'une des revendications 1 à 9, pouvant être obtenu par le fait que le support macroporeux d'oxyde métallique est pré-imprégné d'une solution d'un agent réducteur du composé du palladium, séché, imprégné de la solution du composé du palladium, séché, calciné en vue de la réduction du composé du palladium, imprégné d'une solution d'un composé promoteur, séché et calciné.

11. Utilisation du catalyseur tel que défini à l'une des revendications 1 à 10 pour l'hydrogénération catalytique sélective d'hydrocarbures à insaturation multiple, qui contiennent en totalité ou dans une partie prépondérante, plus de 5 atomes de carbone, en les monooléfines correspondantes.

12. Utilisation selon la revendication 11, caractérisée par le fait que l'hydrogénation sélective a lieu dans le courant du produit d'un craquage ou d'une déshydrogénation catalytique ou thermique d'hydrocarbures.

13. Utilisation selon l'une des revendications 11 ou 12, caractérisée par le fait qu'avant l'hydrogénation sélective, a lieu une pré-séparation ou un fractionnement des hydrocarbures à insaturation multiple, inférieurs.

14. Utilisation selon l'une des revendications 11 à 13, caractérisé par le fait que l'introduction de l'hydrogène d'hydrogénation dans le réacteur d'hydrogénation a lieu de façon séparée de l'introduction des hydrocarbures à insaturation multiple.

15. Utilisation selon l'une des revendications 11 à 14, caractérisé par le fait que l'hydrogénation sélective a lieu dans une plage de température allant de 80 à 180°C, une plage de pression allant de 1 à 10 bars, pour une vitesse spatiale (LHSV) allant de 1 à 30 litres de la fraction d'hydrocarbure liquide par litre de catalyseur et par heure, et un rapport molaire hydrogène à hydrocarbures à insaturation multiple allant de 1,1 à 5.